# EUROPEAN PATENT SPECIFICATION

(11) **EP 3 144 927 B1**
(45) Date of publication and mention of the grant of the patent: **18.11.2020**
(21) Application number: 15185235.7
(22) Date of filing: 15.09.2015
(51) Int. Cl.: G10K 11/178

(54) **WIRELESS NOISE AND VIBRATION SENSING**
DRAHTLOSE RAUSCH- UND VIBRATIONSERFASSUNG
DÉTECTION SANS-FIL DE BRUIT ET DE VIBRATION

(43) Date of publication of application: 22.03.2017
(73) Proprietor: Harman Becker Automotive Systems GmbH, 76307 Karlsbad (DE)
(72) Inventor: Christoph, Markus, 94315 Straubing (DE); Pfaffinger, Gerhard, 93053 Regensburg (DE); Zafeiropoulos, Nikos, 94315 Straubing (DE)
(74) Representative: Westphal, Mussgnug & Partner Patentanwälte mbB

(56) References cited:
- EP-A1- 2 508 364
- WO-A2-2012/162241
- US-A1- 2012 070 012
- US-A1- 2012 089 299

## Description

### FIELD

The disclosure relates to wireless noise and vibration sensor arrangements for road noise control systems, road noise control systems and wireless noise and vibration sensing methods.

### BACKGROUND

Land based vehicles, when driven on roads and other surfaces, generate low frequency noise known as road noise. Even in modern vehicles cabin occupants may be exposed to road noise that is transmitted through the structure, e.g. tires-suspension-body-cabin path, and through airborne paths, e.g. tires-body-cabin path, to the cabin. It is desirable to reduce the road noise experienced by cabin occupants. Active Noise, vibration, and harshness (NVH) control technologies, also known as active road noise control (RNC) systems, can be used to reduce these noise components without modifying the vehicle's structure as in active vibration technologies. However, active sound technologies for road noise cancellation may require very specific noise and vibration (N&V) sensor arrangements throughout the vehicle structure in order to observe road noise related noise and vibration signals. EP 2 508 364 A1 discloses a self-powered monitoring sensor which switches between an operational mode and a non-operational mode dependent on how much power is available for the sensor. However, switching into a non-operational mode when power is not sufficient restricts the deployability of the sensor.

### SUMMARY

The invention provides according to claim 1 a noise and vibration sensor arrangement, which is configured to operate with an active road noise control system, includes an energy harvester configured to obtain electrical energy from an ambient energy source; an acceleration sensor supplied with electrical energy from the energy harvester and configured to generate a sense signal representative of at least one of accelerations, motions and vibrations that act on the acceleration sensor; and a signal processor supplied with electrical energy from the energy harvester and configured to process the sense signal and to provide a processed sense signal, the signal processor having a normal mode of operation with a first energy consumption and an energy saving mode of operation with a second energy consumption that is lower than the first energy consumption. The arrangement further comprises a signal transmitter supplied with electrical energy from the energy harvester and configured to wirelessly broadcast the processed sense signal, the signal transmitter having a normal mode of operation with a third energy consumption and an energy saving mode of operation with a fourth energy consumption that is lower than the third energy consumption, and an energy controller configured to evaluate the electrical energy from the energy harvester and to control at least one of the signal processor and signal transmitter to operate in the energy saving mode when the electrical energy from the harvester is below a predetermined energy level and to otherwise operate in the normal mode. At least one of the signal processor and signal transmitter is configured to process and/or transmit digital signals with a first data rate in the normal mode and a second data rate in the energy saving mode, the first data rate being higher than the second data rate.

An example active road noise control system includes a noise and vibration sensor arrangement, an active road noise control module and at least one loudspeaker.

The invention provides according to claim 8 a noise and vibration measurement method, which is configured to operate with an active road noise control system, includes obtaining electrical energy from an ambient energy source; supplying an acceleration sensor with electrical energy from the energy harvester; generating with the acceleration sensor a sense signal representative of at least one of accelerations, motions and vibrations that act on the acceleration sensor; supplying a signal processor with electrical energy from the energy harvester, the signal processor having a normal mode of operation with a first energy consumption and an energy saving mode of operation with a second energy consumption that is lower than the first energy consumption; and processing the sense signal to provide a processed sense signal. The method further comprises supplying a signal transmitter with electrical energy from the energy harvester, the signal transmitter having a normal mode of operation with a third energy consumption and an energy saving mode of operation with a fourth energy consumption that is lower than the third energy consumption; wirelessly broadcasting the sense signal via the signal transmitter; evaluating the electrical energy obtained from the ambient energy source; and controlling at least one of the signal processor and/or signal transmitter to operate in the energy saving mode when the electrical energy from the harvester is below a predetermined energy level and to otherwise operate in the normal mode. At least one of the signal processor and signal transmitter processes and/or transmits digital signals at a first data rate in the normal mode and at a second data rate in the energy saving mode, the first data rate being higher than the second data rate.

### BRIEF DESCRIPTION OF THE DRAWINGS

The disclosure may be better understood by reading the following description of non-limiting embodiments to the attached drawings, in which like elements are referred to with like reference numbers, wherein below:
Figure 1 is a schematic diagram illustrating an exemplary simple single-channel active road noise control system;
Figure 2 is a schematic diagram illustrating an exemplary simple multi-channel active road noise control system;
Figure 3 is a schematic diagram illustrating a noise and vibration sensor arrangement applicable in the systems shown in Figures 1 and 2;
Figure 4 is a schematic diagram illustrating a mode-dependent sample rate reduction;
Figure 5 is a schematic diagram illustrating a mode-dependent word size reduction; and

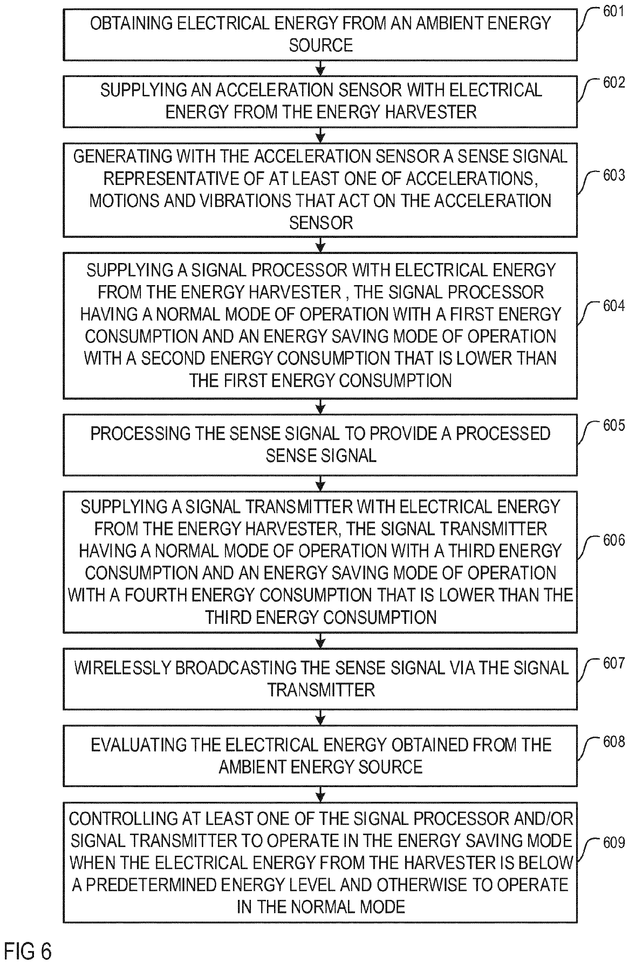

Figure 6 is a flow chart illustrating an example noise and vibration sensing method.

### DETAILED DESCRIPTION

Noise and vibration sensors provide reference inputs to active RNC systems, e.g., multichannel feedforward active road noise control systems, as a basis for generating the anti-noise that reduces or cancels road noise. Noise and vibration sensors may include acceleration sensors such as accelerometers, force gauges, load cells, etc. For example, an accelerometer is a device that measures proper acceleration. Proper acceleration is not the same as coordinate acceleration, which is the rate of change of velocity. Single- and multi-axis models of accelerometers are available for detecting magnitude and direction of the proper acceleration, and can be used to sense orientation, coordinate acceleration, motion, vibration, and shock.

Airborne and structure-borne noise sources are monitored by the noise and vibration sensors in order to provide the highest possible road noise reduction (cancellation) performance between 0 Hz and 1 kHz. For example, acceleration sensors used as input noise and vibration sensors may be disposed across the vehicle to monitor the structural behavior of the suspension and other axle components for global RNC. Above a frequency range that stretches from 0 Hz to approximately 500 Hz, acoustic sensors that measure the airborne road noise may be used as reference control inputs. Furthermore, two microphones may be placed in the headrest in close proximity of the passenger's ears to provide an error signal or error signals in case of binaural reduction or cancellation. The feedforward filters are tuned or adapted to achieve maximum noise reduction or noise cancellation at both ears.

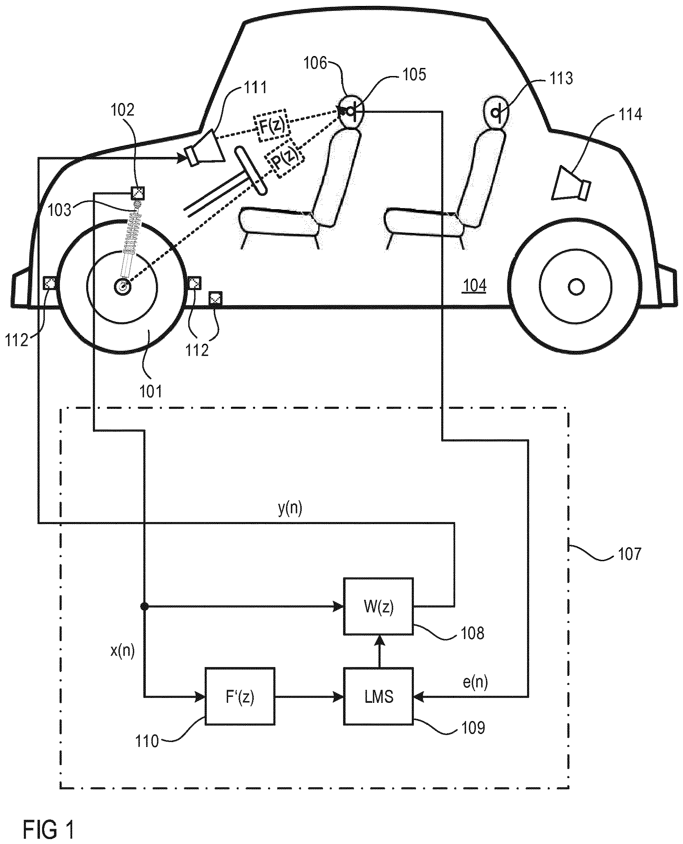

A simple single-channel feedforward active RNC system may be constructed as shown in Figure 1. Vibrations that originate from a wheel 101 moving on a road surface are detected by a suspension acceleration sensor 102 which is mechanically coupled with a suspension device 103 of an automotive vehicle 104 and which outputs a noise and vibration signal x(n) that represents the detected vibrations and, thus, correlates with the road noise audible within the cabin. At the same time, an error signal e(n) representing noise present in the cabin of the vehicle 104 is detected by a microphone 105 arranged within the cabin in a headrest 106 of a seat (e.g., the driver's seat) . The road noise originating from the wheel 101 is mechanically transferred to the microphone 105 according to a transfer characteristic P(z).

A transfer characteristic W(z) of a controllable filter 108 is controlled by an adaptive filter controller 109 which may operate according to the known least mean square (LMS) algorithm based on the error signal e(n) and on the road noise signal x(n) filtered with a transfer characteristic F'(z) by a filter 110, wherein W(z) = -P(z)/F(z). F'(z) = F(z) and F(z) represents the transfer function between a loudspeaker and the microphone 105. A signal y(n) having a waveform inverse in phase to that of the road noise audible within the cabin is generated by an adaptive filter formed by controllable filter 108 and filter controller 109, based on the thus identified transfer characteristic W(z) and the noise and vibration signal x(n). From signal y(n) a waveform inverse in phase to that of the road noise audible within the cabin is then generated by the loudspeaker 111, which may be arranged in the cabin, to thereby reduce the road noise within the cabin. The exemplary system described above employs a straightforward single-channel feedforward filtered-x LMS control structure 107 for the sake of simplicity, but other control structures, e.g., multi-channel structures with a multiplicity of additional channels, a multiplicity of additional noise sensors 112, a multiplicity of additional microphones 113, and a multiplicity of additional loudspeakers 114, may be applied as well.

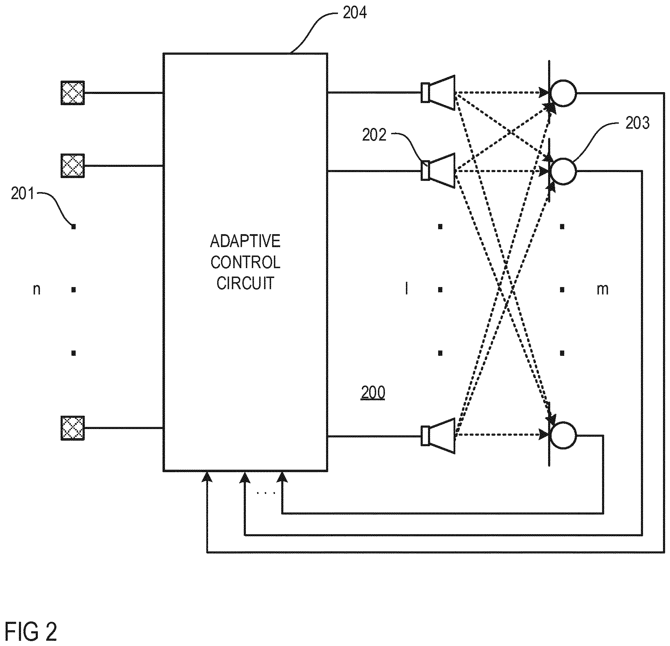

Figure 2 shows an active road noise control system 200 which is a multi-channel type active road noise control system capable of suppressing noise from a plurality of noise and vibration sources. The active road noise control system 200 comprises a multiplicity n of noise and vibration sensors 201, a multiplicity 1 of loudspeakers 202, a multiplicity m of microphones 203, and an adaptive control circuit 204 which operates to minimize the error between noise from the noise and vibration sources (primary noise) and cancelling noise (secondary noise). The adaptive control circuit 204 may include a number of control circuits provided for each of the loudspeakers 202, which create cancelling signals for cancelling noise from corresponding noise and vibration sources.

In conventional active RNC systems, a major cost factor in connection with sensors in car environments is the sensor wiring. Self-sustaining wireless sensors that use energy-harvest technologies are able to avoid such costs, but are difficult to handle when it comes to reliability. Taking acceleration sensors (accelerometers) as an example, such sensors only need to operate if the car is moving and if sufficient kinetic energy is available, allowing a self-powering of the sensors. At first glance this seems to be a good solution, but situations may also occur, such as cruising over smooth asphalt, in which the energy harvest may not generate sufficient energy to maintain a reliable operation of the sensor, which will be the case if a sensor part, optional signal processing part, and/or data transmission part of a sensor arrangement are operative. If such a situation occurs, where not enough energy is available, it must be avoided that the sensor stops transmitting data, otherwise the whole system is likely to fail.

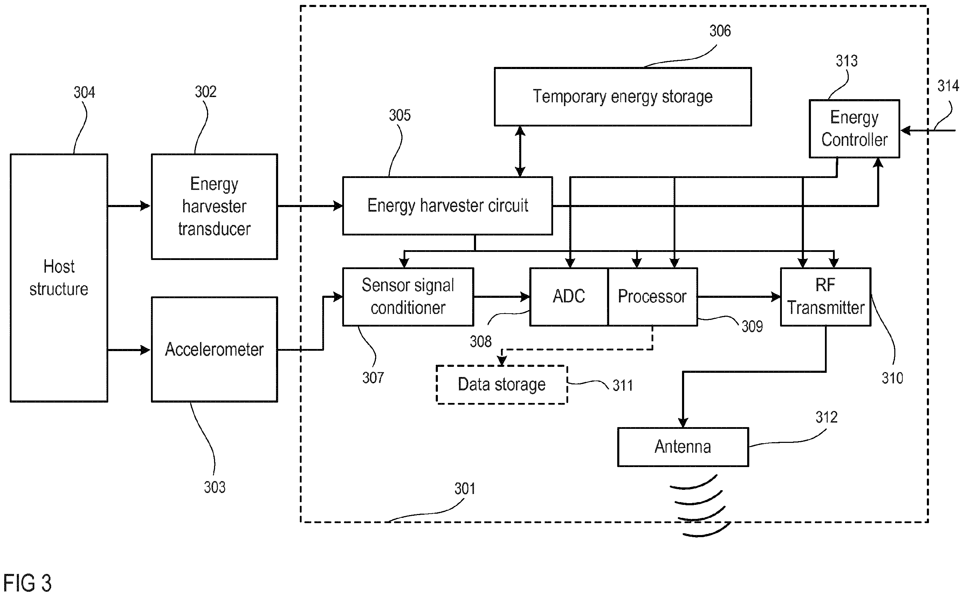

Referring now to Figure 3, an example self-sustaining wireless noise and vibration sensor arrangement may include a circuit arrangement 301 electrically coupled with an energy harvester transducer 302 and an acceleration sensor 303, which are both mechanically coupled with a host structure 304. The electrical circuit arrangement 301 in the sensor arrangement may include an energy harvester circuit 305, temporary energy storage 306, sense signal conditioner 307, analog-to-digital converter (ADC) 308, controller 309, and a radio frequency transmitter 310. Sensor conditioner 307 and processor 309 form a basic signal processor that can be fully analog, fully digital or combined analog and digital (e.g., in combination with analog-to-digital converter 308 as shown). The circuit arrangement 301 may, in some aspects, also include the acceleration sensor 303, such as a microelectromechanical system (MEMS) accelerometer, data storage 311, and an antenna 312.

In the energy harvester circuit 305, electrical energy derived by the electromechanical energy harvester transducer 302 from kinetic energy acting on the transducer 302 is conditioned using an electrical circuit which may include a diode bridge, filter capacitor, over voltage protection, and DC-DC step up or down converter, a voltage regulator, and an output switch. The energy conditioning may provide rectification of a periodic bi-polar voltage waveform from the energy harvester transducer so that a uni-polar waveform can be harvested. The uni-polar, but often period rectified, waveform is fed to one or more input capacitors that act as a voltage filter so that a more steady DC voltage is available for further input voltage conditioning such as DC-DC conversion. The input voltage conditioner may also include a DC to DC voltage step-up or step-down so that the voltage at the filter capacitor can be maintained at an optimal voltage that provides an electrical impedance match with the energy harvester transducer but is also higher or lower than the target energy storage voltage level that may be inherent to the temporary energy storage. The input voltage conditioner may also include input voltage protection to ensure that the diode rectifier and input filter capacitor are not damaged from high voltages that the energy harvester transducer may supply under certain extraneous circumstances.

The temporary energy storage 306, which is operatively connected to the energy harvester circuit 305, may also include a voltage protection feature such as a Zener diode or voltage comparator with a resistive dissipation element to protect the temporary energy storage 306 in the case when it is at its upper energy storage limit and the input energy exceeds the output energy of the temporary energy storage 306. The temporary energy storage 306 provides an energy reservoir so that an electrical load can draw power that is much higher than that supplied by the harvester for short durations. This is needed because the electrical load is generally determined by its specific application and it is often much higher than that which is available directly from the energy harvester transducer 302. However, these loads are typically required for a brief period of time, which allows for a duty cycle operation that balances the harvester-load energy budget. The load can either be connected directly with the energy reservoir or an additional output voltage regulator can be used between the reservoir and the load. This is necessary for many applications because the energy reservoir voltage often fluctuates with the amount of energy stored while the load requires an input voltage that is fixed. In addition to the regulator, a hysteretic power supply switch may provide conductivity from the temporary energy storage 306 or voltage regulator to an electrical load which may include the signal conditioner 307, processor 309, and radio frequency transmitter 310.

The sense signal conditioner 307 may include voltage regulators including linear regulators, operational amplifiers, and analog filter circuitry. The analog filters may serve as a frequency band pass filter with one or more poles. The filter is designed to pass a high fidelity signal for frequencies that correspond to the analog-to-digital converter sampling rate. The sense signal conditioner 307 is powered by the energy harvester circuit 305 and is in communication with the analog-to-digital converter 308. Alternatively, a digital MEMS acceleration sensor may be used which includes analog-to-digital conversion and signal conditioning in one integrated circuit. In this case the digital accelerometer may be wired directly to the controller through a communication bus.

Furthermore, the analog-to-digital converter 308 may be a part of the processor 309 or it can be a separate subsystem of the circuit arrangement 301. The processor 309 may include or may be included in a microprocessor, microcontroller, digital signal processor or any other logic circuitry. In cases when the sampling rate for the accelerometer is high and the sampling duration is long, the optional supplementary data storage 311 in communication with the processor 309 may be employed. The data storage 311 may be a type of flash memory (non-volatile computer storage). A portion of the firmware code in the processor 309, the radio frequency transmitter 310, and the antenna 312 comprise the wireless communication part of the sensor arrangement. The wireless communication supplies data from the processor to a remote wireless data aggregator. When bi-directional communication is provided, it also may serve as a means to maintain remote control and monitoring of the sensor arrangement. The radio frequency transmitter 310 is connected to an antenna which is used to optimally project and receive radio frequency signals. The antenna may be designed as a subsystem of the circuit arrangement 301 or as a separate element. The antenna may be a patch, chip, or PCB antenna. The antenna may be located near the exterior of the sensor and at the greatest distance away from the large metal objects of the sensor arrangement.

Some key requirements for the wireless operation of the sensor are high data throughput rate, rapid response, robust data transmission, high level of data integrity, multi-node networking, and low power usage. Higher frequency bands exhibit moderate to high data throughput to support high sensor sampling rates and good transmission performance over short distances (10-100 m). The frequency of these bands also favors small devices because antenna size scales roughly inversely with frequency for a given performance level. Approaches for maximizing communication robustness in the presence of inter-network traffic and external wireless interference may take advantage of short turn-on times, high data rate, and ultra-low power acknowledgment to enable robustness purely through rapid and repetitive retransmissions.

In order to minimize the sensor size and weight, the total system energy budget is minimized at all levels including the acceleration measurement. MEMS accelerometers can be implemented to exhibit ultra-low power operation; however, the current commercially available acceleration sensors have limited bandwidth and noise floor which precludes uses for applications, requiring high fidelity measurement as for RNC systems. Piezoelectric accelerometers are capable of performing wide bandwidth and high resolution measurements. However, acceleration measurement using traditional piezoelectric accelerometers can consume significant power and therefore the particular implementation of the sensor is important. Integrated charge amplifiers are generally used with piezoelectric accelerometers because they enable the use of long wire connections between the accelerometer and the data acquisition system that are protected to some degree from external EMI. In wireless accelerometers, the wire length from the piezoelectric element to the microprocessor analog to digital converter can be short and therefore the integrated charge amplifier can be eliminated or redesigned for low power operation. To shorten the wire length, the piezoelectric accelerometer and the circuit should be located adjacent to one another. Simple signal conditioning including filters and amplifiers can be implemented on the circuit board instead of using a piezoelectric accelerometer integrated charge amplifier.

Even if all measures have been taken to reduce the basic energy consumption of the sensor arrangement, there is still some risk involved that the sensor arrangement will not be supplied with enough energy to ensure the proper functioning of the sensor arrangement. In order to reduce this risk, at least one of the signal processor (e.g., processor 309 and eventually analog-to-digital converter 308 shown in Figure 3), and the signal transmitter (e.g., radio frequency transmitter 310 shown in Figure 3) may process and/or transmit digital signals at a data rate in the energy saving mode that is reduced compared to the normal mode. An energy controller 313 may evaluate the electrical energy supplied by the energy harvester circuit 305 in connection with the energy harvester transducer 302 and may control at least one of the analog-to-digital converter 308, processor 309 and signal transmitter 310 to operate in the energy saving mode when the available electrical energy from the harvester circuit 305 is below a predetermined energy level 314 and to otherwise operate in the normal mode. The available energy may be evaluated, for example, by examining the effective value of the supply voltage output by the harvester circuit 305, voltage drops of its supply voltage, the energy stored in the temporary energy storage 306 etc.

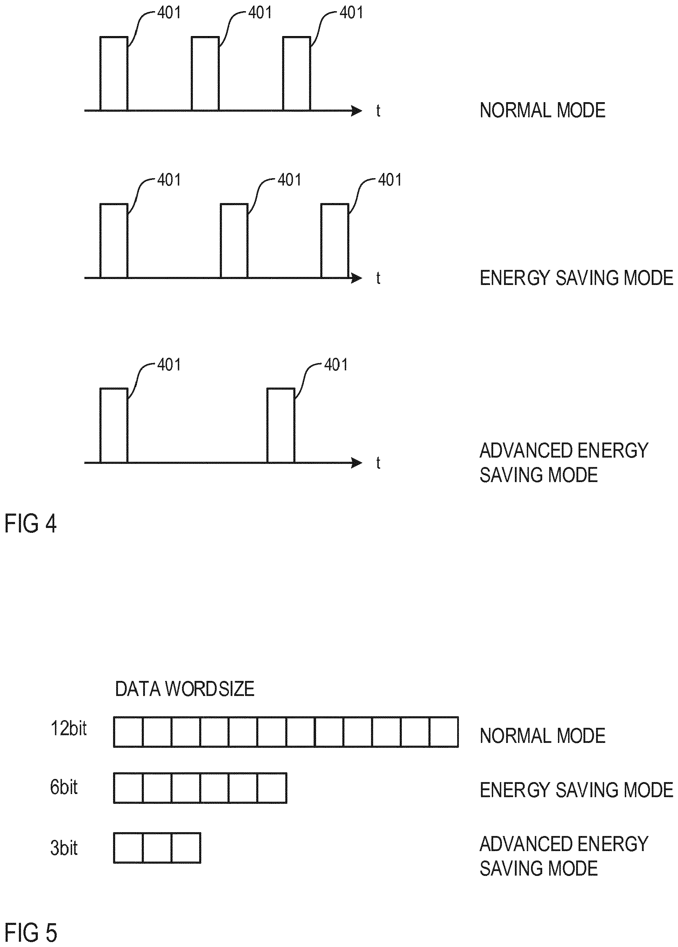

A reduced data rate may be achieved by at least one of reducing the sampling rate and reducing the word size of the data to be processed and/or transmitted. Figure 4 illustrates the reduction of the sampling rate which has the effect that, on the one hand, less samples 401 per time t are processed and/or transmitted in the energy saving mode; however, the frequency range of the signals to be processed and/or transmitted is also reduced. Therefore, the sampling rate cannot not be reduced to any desired rate without deteriorating the signal quality significantly. Additionally or alternatively, the word size of the data, i.e. of its samples, may be reduced as shown in Figure 5. For example 12bit sample in normal mode may be reduced to 6bit in the energy saving mode.

As can be seen in Figures 4 and 5, an advanced energy saving mode may be employed when the available electrical energy is below a further predetermined energy level which is below the predetermined energy level 314. In the advanced energy saving mode, the sample rate is further reduce to, e.g., 50% of that used in the normal mode and/or the word size may be reduced to, e.g., 3 bit. Nevertheless, the data flow will not be interrupted, which is important for the proper operation of the sensor arrangement.

A noise and vibration sensing method according to the invention includes obtaining electrical energy from an ambient energy source (601); supplying an acceleration sensor with electrical energy from the energy harvester (602); and generating with the acceleration sensor a sense signal representative of at least one of accelerations, motions and vibrations that act on the acceleration sensor (603). The method further comprises supplying a signal processor with electrical energy from the energy harvester (604), wherein the signal processor has a normal mode of operation with a first energy consumption and an energy saving mode of operation with a second energy consumption that is lower than the first energy consumption, and processing the sense signal to provide a processed sense signal (605). The method further comprises supplying a signal transmitter with electrical energy from the energy harvester (606), wherein the signal transmitter has a normal mode of operation with a third energy consumption and an energy saving mode of operation with a fourth energy consumption that is lower than the third energy consumption, wirelessly broadcasting the sense signal via the signal transmitter (607), and evaluating the electrical energy obtained from the ambient energy source (608). At least one of the signal processor and/or signal transmitter operate in the energy saving mode when the electrical energy from the harvester is below a predetermined energy level and otherwise operate in the normal mode (609).

Unless otherwise noted, one or more of the described methods may be performed by a suitable device and/or combination of devices. The described methods and associated actions may also be performed in various orders in addition to the order described in this application, in parallel, and/or simultaneously. The described systems are exemplary in nature, and may include additional elements and/or omit elements.

As used in this application, an element or step recited in the singular and proceeded with the word "a" or "an" should be understood as not excluding the plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The following claims particularly point out subject matter from the above disclosure that is regarded as novel and non-obvious.

## Claims

1. A noise and vibration sensor arrangement configured to operate with an active road noise control system, the arrangement comprising:
an energy harvester (302, 305) configured to obtain electrical energy from an ambient energy source (302);
an acceleration sensor (303) supplied with electrical energy from the energy harvester (302, 305) and configured to generate a sense signal representative of at least one of accelerations, motions and vibrations that act on the acceleration sensor (303);
a signal processor (309) supplied with electrical energy from the energy harvester (302, 305) and configured to process the sense signal and to provide a processed sense signal, the signal processor (309) having a normal mode of operation with a first energy consumption and an energy saving mode of operation with a second energy consumption that is lower than the first energy consumption;
a signal transmitter (310) supplied with electrical energy from the energy harvester (302, 305) and configured to wirelessly broadcast the processed sense signal, the signal transmitter (310) having a normal mode of operation with a third energy consumption and an energy saving mode of operation with a fourth energy consumption that is lower than the third energy consumption; and
an energy controller (313) configured to evaluate the electrical energy from the energy harvester (302, 305) and to control at least one of the signal processor (309) and signal transmitter (310) to operate in the energy saving mode when the electrical energy from the harvester (302, 305) is below a predetermined energy level (314) and to otherwise operate in the normal mode, **characterized in that**
at least one of the signal processor (309) and signal transmitter is configured to process and/or transmit digital signals with a first data rate in the normal mode and a second data rate in the energy saving mode, the first data rate being higher than the second data rate.

2. The arrangement of claim 1, wherein the digital signals have a first sampling rate in the normal mode and a second sampling rate in the energy saving mode, the first sampling rate being greater than the second sampling rate.

3. The arrangement of claim 1 or 2, wherein the digital signals have a first digital word size in the normal mode and a second digital word size in the energy saving mode, the first digital word size being greater than the second digital word size.

4. The arrangement of any of claims 1 - 3, wherein the energy harvester (302, 305) comprises a temporary energy storage (306) that is configured to store electrical energy when the energy harvester (302, 305) obtains more electrical energy than is supplied to the acceleration sensor (303), the signal processor (309) and the signal transmitter (310), and to provide additional electrical energy when the energy harvester (302, 305) obtains less electrical energy than is supplied to the acceleration sensor (303), signal processor (309) and signal transmitter (310).

5. The arrangement of any of claims 1 - 4, wherein the energy harvester (302, 305) comprises an energy harvester transducer (302) configured to convert mechanical energy into electrical energy that is supplied to the acceleration sensor (303), signal processor (309) and signal transmitter (310).

6. The arrangement of any of claims 1 - 5, wherein
at least one of the signal processor (309) and signal transmitter (310) further comprises an advanced energy saving mode of operation with an energy consumption that is lower than the energy consumption in the respective energy saving mode of operation; and
the energy controller (313) is further configured to control the signal processor (309) and/or signal transmitter (310) to operate in the advanced energy saving mode when the electrical energy from the harvester (302, 305) is below a further predetermined energy level (314).

7. An active road noise control system comprising a noise and vibration sensor arrangement according to claims 1- 6, an active road noise control module (107) and at least one loudspeaker (111, 114, 202).

8. A noise and vibration sensing method configured to operate with an active road noise control system, the method comprising:
obtaining electrical energy from an ambient energy source (601);
supplying an acceleration sensor with electrical energy from the energy harvester (602);
generating with the acceleration sensor a sense signal representative of at least one of accelerations, motions and vibrations that act on the acceleration sensor (603);
supplying a signal processor with electrical energy from the energy harvester, the signal processor having a normal mode of operation with a first energy consumption and an energy saving mode of operation with a second energy consumption that is lower than the first energy consumption (604);
processing the sense signal to provide a processed sense signal (605);
supplying a signal transmitter with electrical energy from the energy harvester, the signal transmitter having a normal mode of operation with a third energy consumption and an energy saving mode of operation with a fourth energy consumption that is lower than the third energy consumption (606);
wirelessly broadcasting the sense signal via the signal transmitter (607);
evaluating the electrical energy obtained from the ambient energy source (608); and
controlling at least one of the signal processor and/or signal transmitter to operate in the energy saving mode when the electrical energy from the harvester is below a predetermined energy level and to otherwise operate in the normal mode (609); **characterized in that**
at least one of the signal processor and signal transmitter processes and/or transmits digital signals at a first data rate in the normal mode and at a second data rate in the energy saving mode, the first data rate being higher than the second data rate.

9. The method of claim 8, wherein the digital signals have a first sampling rate in the normal mode and a second sampling rate in the energy saving mode, the first sampling rate being greater than the second sampling rate.

10. The method of claim 8 or 9, wherein the digital signals have a first digital word size in the normal mode and a second digital word size in the energy saving mode, the first digital word size being greater than the second digital word size.

11. The method of any of claims 8 - 10, further comprising storing electrical energy when more electrical energy is obtained than is supplied to the acceleration sensor, the signal processor and the signal transmitter, and providing additional electrical energy when less electrical energy is obtained than is supplied to the acceleration sensor, the signal processor and the signal transmitter.

12. The method of any of claims 8 - 11, wherein obtaining electrical energy from an ambient energy source includes converting mechanical energy into electrical energy.

13. The method of any of claims 8 - 12, wherein
at least one of the signal processor and signal transmitter further comprises an advanced energy saving mode of operation with an energy consumption that is lower than the energy consumption in the respective energy saving mode of operation; and
the method further comprises controlling the signal processor and/or signal transmitter to operate in the advanced energy saving mode when the electrical energy from the harvester is below a further predetermined energy level.

## Patentansprüche

1. Rausch- und Vibrationssensoranordnung, die dazu konfiguriert ist, mit einem aktiven Straßengeräuschsteuersystem betrieben zu werden, wobei die Anordnung Folgendes umfasst:
einen Energiesammler (302, 305), der dazu konfiguriert ist, elektrische Energie von einer Umgebungsenergiequelle (302) zu gewinnen;
einen Beschleunigungssensor (303), der mit elektrischer Energie von dem Energiesammler (302, 305) versorgt wird und der dazu konfiguriert ist, ein Erfassungssignal zu generieren, das für mindestens eines von Beschleunigungen, Bewegungen und Vibrationen, die auf den Beschleunigungssensor (303) wirken, repräsentativ ist;
einen Signalprozessor (309), der mit elektrischer Energie von dem Energiesammler (302, 305) versorgt wird und der dazu konfiguriert ist, das Erfassungssignal zu verarbeiten und ein verarbeitetes Erfassungssignal bereitzustellen, wobei der Signalprozessor (309) einen normalen Betriebsmodus mit einem ersten Energieverbrauch und einen Energiesparbetriebsmodus mit einem zweiten Energieverbrauch, der geringer als der erste Energieverbrauch ist, aufweist;
einen Signalsender (310), der mit elektrischer Energie von dem Energiesammler (302, 305) versorgt wird und der dazu konfiguriert ist, das verarbeitete Erfassungssignal drahtlos zu senden, wobei der Signalsender (310) einen normalen Betriebsmodus mit einem dritten Energieverbrauch und einen Energiesparbetriebsmodus mit einem vierten Energieverbrauch, der geringer als der dritte Energieverbrauch ist, aufweist; und eine Energiesteuerung (313), die dazu konfiguriert ist, die elektrische Energie von dem Energiesammler (302, 305) auszuwerten und mindestens einen von dem Signalprozessor (309) und dem Signalsender (310) zu steuern, damit sie im Energiesparmodus arbeiten, wenn die elektrische Energie von dem Sammler (302, 305) unter einem vorbestimmten Energieniveau (314) liegt, und ansonsten in dem normalen Modus arbeiten, **dadurch gekennzeichnet, dass**
mindestens einer von dem Signalprozessor (309) und dem Signalsender dazu konfiguriert ist, digitale Signale mit einer ersten Datenrate im normalen Modus und einer zweiten Datenrate im Energiesparmodus zu verarbeiten und/oder zu übertragen, wobei die erste Datenrate höher als die zweite Datenrate ist.

2. Anordnung nach Anspruch 1, wobei die digitalen Signale eine erste Abtastrate im normalen Modus und eine zweite Abtastrate im Energiesparmodus aufweisen, wobei die erste Abtastrate höher als die zweite Abtastrate ist.

3. Anordnung nach Anspruch 1 oder 2, wobei die digitalen Signale eine erste digitale Wortgröße im normalen Modus und eine zweite digitale Wortgröße im Energiesparmodus aufweisen, wobei die erste digitale Wortgröße größer als die zweite digitale Wortgröße ist.

4. Anordnung nach einem der Ansprüche 1-3, wobei der Energiesammler (302, 305) einen temporären Energiespeicher (306) umfasst, der dazu konfiguriert ist, elektrische Energie zu speichern, wenn der Energiesammler (302, 305) mehr elektrische Energie gewinnt als dem Beschleunigungssensor (303), dem Signalprozessor (309) und dem Signalsender (310) zugeführt wird, und zusätzliche elektrische Energie bereitzustellen, wenn der Energiesammler (302, 305) weniger elektrische Energie gewinnt als dem Beschleunigungssensor (303), dem Signalprozessor (309) und dem Signalsender (310) zugeführt wird.

5. Anordnung nach einem der Ansprüche 1-4, wobei der Energiesammler (302, 305) einen Energiesammlerwandler (302) umfasst, der dazu konfiguriert ist, mechanische Energie in elektrische Energie umzuwandeln, die dem Beschleunigungssensor (303), dem Signalprozessor (309) und dem Signalsender (310) zugeführt wird.

6. Anordnung nach einem der Ansprüche 1-5, wobei mindestens einer von dem Signalprozessor (309) und dem Signalsender (310) ferner einen erweiterten Energiesparbetriebsmodus mit einem Energieverbrauch, der geringer als der Energieverbrauch in dem jeweiligen Energiesparbetriebsmodus ist, umfasst; und
die Energiesteuerung (313) ferner dazu konfiguriert ist, den Signalprozessor (309) und/oder den Signalsender (310) zu steuern, damit sie in dem erweiterten Energiesparbetriebsmodus arbeiten, wenn die elektrische Energie von dem Sammler (302, 305) unter einem weiteren vorbestimmten Energieniveau (314) liegt.

7. Aktives Straßengeräuschsteuersystem, umfassend eine Rausch- und Vibrationssensoranordnung nach Ansprüchen 1-6, ein aktives Straßengeräuschsteuermodul (107) und mindestens einen Lautsprecher (111, 114, 202).

8. Rausch- und Vibrationserfassungsverfahren, das dazu konfiguriert ist, mit einem aktiven Straßengeräuschsteuersystem betrieben zu werden, wobei das Verfahren Folgendes umfasst:
Gewinnen von elektrischer Energie von einer Umgebungsenergiequelle (601);
Versorgen eines Beschleunigungssensors mit elektrischer Energie von dem Energiesammler (602);
Generieren eines Erfassungssignals mit dem Beschleunigungssensor, das für mindestens eines von Beschleunigungen, Bewegungen und Vibrationen, die auf den Beschleunigungssensor wirken, repräsentativ ist (603);
Versorgen eines Signalprozessors mit elektrischer Energie von dem Energiesammler, wobei der Signalprozessor einen normalen Betriebsmodus mit einem ersten Energieverbrauch und einen Energiesparbetriebsmodus mit einem zweiten Energieverbrauch, der geringer als der erste Energieverbrauch ist, aufweist (604);
Verarbeiten des Erfassungssignals, um ein verarbeitetes Erfassungssignal bereitzustellen (605);
Versorgen eines Signalsenders mit elektrischer Energie von dem Energiesammler, wobei der Signalsender einen normalen Betriebsmodus mit einem dritten Energieverbrauch und einen Energiesparbetriebsmodus mit einem vierten Energieverbrauch, der geringer als der dritte Energieverbrauch ist, aufweist (606) ;
drahtloses Senden des Erfassungssignals über den Signalsender (607) ;
Auswerten der elektrischen Energie, die von der Umgebungsenergiequelle gewonnen wird (608); und
Steuern mindestens eines von dem Signalprozessor und/oder dem Signalsender, damit sie im Energiesparmodus arbeiten, wenn die elektrische Energie von dem Sammler unter einem vorbestimmten Energieniveau liegt, und ansonsten in dem normalen Modus arbeiten (609);
**dadurch gekennzeichnet, dass**
mindestens einer von dem Signalprozessor und dem Signalsender digitale Signale mit einer ersten Datenrate im normalen Modus und einer zweiten Datenrate im Energiesparmodus verarbeitet und/oder überträgt, wobei die erste Datenrate höher als die zweite Datenrate ist.

9. Verfahren nach Anspruch 8, wobei die digitalen Signale eine erste Abtastrate im normalen Modus und eine zweite Abtastrate im Energiesparmodus aufweisen, wobei die erste Abtastrate höher als die zweite Abtastrate ist.

10. Verfahren nach Anspruch 8 oder 9, wobei die digitalen Signale eine erste digitale Wortgröße im normalen Modus und eine zweite digitale Wortgröße im Energiesparmodus aufweisen, wobei die erste digitale Wortgröße größer als die zweite digitale Wortgröße ist.

11. Verfahren nach einem der Ansprüche 8-10, ferner umfassend Speichern von elektrischer Energie, wenn mehr elektrische Energie gewonnen wird als dem Beschleunigungssensor, dem Signalprozessor und dem Signalsender zugeführt wird, und Bereitstellen zusätzlicher elektrischer Energie, wenn weniger elektrische Energie gewonnen wird als dem Beschleunigungssensor, dem Signalprozessor und dem Signalsender zugeführt wird.

12. Verfahren nach einem der Ansprüche 8-11, wobei das Gewinnen von elektrischer Energie von einer Umgebungsenergiequelle Umwandeln von mechanischer Energie in elektrische Energie beinhaltet.

13. Verfahren nach einem der Ansprüche 8-12, wobei mindestens einer von dem Signalprozessor und dem Signalsender ferner einen erweiterten Energiesparbetriebsmodus mit einem Energieverbrauch, der geringer als der Energieverbrauch in dem jeweiligen Energiesparbetriebsmodus ist, umfasst; und
das Verfahren ferner Steuern des Signalprozessors und/oder des Signalsenders umfasst, damit sie in dem erweiterten Energiesparbetriebsmodus arbeiten, wenn die elektrische Energie von dem Sammler unter einem weiteren vorbestimmten Energieniveau liegt.

## Revendications

1. Agencement de détection de bruit et de vibration configuré pour fonctionner avec un système de contrôle actif du bruit de roulement, l'agencement comprenant :
un dispositif de collecte d'énergie (302, 305) configuré pour obtenir de l'énergie électrique à partir d'une source d'énergie ambiante (302) ;
un capteur d'accélération (303) alimenté en énergie électrique à partir du dispositif de collecte d'énergie (302, 305) et configuré pour générer un signal de détection représentatif d'au moins un parmi des accélérations, des mouvements et des vibrations qui agissent sur le capteur d'accélération (303) ;
un processeur de signal (309) alimenté en énergie électrique à partir du dispositif de collecte d'énergie (302, 305) et configuré pour traiter le signal de détection et pour fournir un signal de détection traité, le processeur de signal (309) ayant un mode de fonctionnement normal avec une première consommation d'énergie et un mode de fonctionnement d'économie d'énergie avec une deuxième consommation d'énergie qui est inférieure à la première consommation d'énergie ;
un transmetteur de signal (310) alimenté en énergie électrique à partir du dispositif de collecte d'énergie (302, 305) et configuré pour diffuser sans fil le signal de détection traité, le transmetteur de signal (310) ayant un mode de fonctionnement normal avec une troisième consommation d'énergie et un mode de fonctionnement d'économie d'énergie avec une quatrième consommation d'énergie qui est inférieure à la troisième consommation d'énergie ; et
un contrôleur d'énergie (313) configuré pour évaluer l'énergie électrique provenant du dispositif de collecte d'énergie (302, 305) et pour commander au moins un du processeur de signal (309) et du transmetteur de signal (310) pour fonctionner dans le mode d'économie d'énergie quand l'énergie électrique provenant du dispositif de collecte (302, 305) est au-dessous d'un niveau d'énergie prédéterminé (314) et pour fonctionner autrement dans le mode normal, **caractérisé en ce que**
au moins un du processeur de signal (309) et du transmetteur de signal est configuré traiter et/ou transmettre des signaux numériques avec un premier débit de données dans le mode normal et un second débit de données dans le mode d'économie d'énergie, le premier débit de données étant plus élevé que le second débit de données.

2. Agencement selon la revendication 1, dans lequel les signaux numériques ont un premier taux d'échantillonnage dans le mode normal et un second taux d'échantillonnage dans le mode d'économie d'énergie, le premier taux d'échantillonnage étant plus grand que le second taux d'échantillonnage.

3. Agencement selon la revendication 1 ou 2, dans lequel les signaux numériques ont une première taille de mots numériques dans le mode normal et une seconde taille de mots numériques dans le mode d'économie d'énergie, la première taille de mots numériques étant plus grande que la seconde taille de mots numériques.

4. Agencement selon l'une quelconque des revendications 1 à 3, dans lequel le dispositif de collecte d'énergie (302, 305) comprend un dispositif de stockage d'énergie temporaire (306) qui est configuré pour stocker de l'énergie électrique quand le dispositif de collecte d'énergie (302, 305) obtient plus d'énergie électrique que celle délivrée au capteur d'accélération (303), au processeur de signal (309) et au transmetteur de signal (310), et pour fournir une énergie électrique additionnelle quand le dispositif de collecte d'énergie (302, 305) obtient moins d'énergie électrique que celle délivrée au capteur d'accélération (303), au processeur de signal (309) et au transmetteur de signal (310).

5. Agencement selon l'une quelconque des revendications 1 à 4, dans lequel le dispositif de collecte d'énergie (302, 305) comprend un transducteur de collecte d'énergie (302) configuré pour convertir une énergie mécanique en une énergie électrique qui est délivrée au capteur d'accélération (303), au processeur de signal (309) et au transmetteur de signal (310).

6. Agencement selon l'une quelconque des revendications 1 à 5, dans lequel
au moins un du processeur de signal (309) et du transmetteur de signal (310) comprend en outre un mode de fonctionnement d'économie d'énergie avancé avec une consommation d'énergie qui est inférieure à la consommation d'énergie dans le mode de fonctionnement d'économie d'énergie respectif ; et
le contrôleur d'énergie (313) est configuré en outre pour commander le processeur de signal (309) et/ou le transmetteur de signal (310) pour fonctionner dans le mode d'économie d'énergie avancé quand l'énergie électrique provenant du dispositif de collecte (302, 305) est au-dessous d'un autre niveau d'énergie prédéterminé (314).

7. Système de contrôle actif du bruit de roulement comprenant un agencement de détection de bruit et de vibration selon les revendications 1 à 6, un module de contrôle actif du bruit de roulement (107) et au moins un haut-parleur (111, 114, 202).

8. Procédé de détection de bruit et de vibration configuré pour fonctionner avec un système de contrôle actif du bruit de roulement, le procédé comprenant :
l'obtention d'une énergie électrique à partir d'une source d'énergie ambiante (601) ;
l'alimentation d'un capteur d'accélération en énergie électrique à partir du dispositif de collecte d'énergie (602) ;
la génération avec le capteur d'accélération d'un signal de détection représentatif d'au moins un parmi des accélérations, des mouvements et des vibrations qui agissent sur le capteur d'accélération (603) ;
l'alimentation d'un processeur de signal en énergie électrique à partir du dispositif de collecte d'énergie, le processeur de signal ayant un mode de fonctionnement normal avec une première consommation d'énergie et un mode de fonctionnement d'économie d'énergie avec une deuxième consommation d'énergie qui est inférieure à la première consommation d'énergie (604) ; le traitement du signal de détection pour fournir un signal de détection traité (605) ;
l'alimentation d'un transmetteur de signal en énergie électrique à partir du dispositif de collecte d'énergie, le transmetteur de signal ayant un mode de fonctionnement normal avec une troisième consommation d'énergie et un mode de fonctionnement d'économie d'énergie avec une quatrième consommation d'énergie qui est inférieure à la troisième consommation d'énergie (606) ;
la diffusion sans fil du signal de détection via le transmetteur de signal (607) ;
l'évaluation de l'énergie électrique obtenue à partir de la source d'énergie ambiante (608) ; et
la commande d'au moins un du processeur de signal et/ou du transmetteur de signal pour fonctionner dans le mode d'économie d'énergie quand l'énergie électrique provenant du dispositif de collecte est au-dessous d'un niveau d'énergie prédéterminé et pour fonctionner autrement dans le mode normal (609) ; **caractérisé en ce que**
au moins un du processeur de signal et du transmetteur de signal traite et/ou transmet des signaux numériques avec un premier débit de données dans le mode normal et un second débit de données dans le mode d'économie d'énergie, le premier débit de données étant plus élevé que le second débit de données.

9. Procédé selon la revendication 8, dans lequel les signaux numériques ont un premier taux d'échantillonnage dans le mode normal et un second taux d'échantillonnage dans le mode d'économie d'énergie, le premier taux d'échantillonnage étant plus grand que le second taux d'échantillonnage.

10. Procédé selon la revendication 8 ou 9, dans lequel les signaux numériques ont une première taille de mots numériques dans le mode normal et une seconde taille de mots numériques dans le mode d'économie d'énergie, la première taille de mots numériques étant plus grande que la seconde taille de mots numériques.

11. Procédé selon l'une quelconque des revendications 8 à 10, comprenant en outre le stockage d'énergie électrique quand plus d'énergie électrique est obtenue que celle délivrée au capteur d'accélération, au processeur de signal et au transmetteur de signal, et la fourniture d'une énergie électrique additionnelle quand moins d'énergie électrique est obtenue que celle délivrée au capteur d'accélération, au processeur de signal et au transmetteur de signal.

12. Procédé selon l'une quelconque des revendications 8 à 11, dans lequel l'obtention d'une énergie électrique à partir d'une source d'énergie ambiante inclut la conversion d'une énergie mécanique en une énergie électrique.

13. Procédé selon l'une quelconque des revendications 8 à 12, dans lequel
au moins un du processeur de signal et du transmetteur de signal comprend en outre un mode de fonctionnement d'économie d'énergie avancé avec une consommation d'énergie qui est inférieure à la consommation d'énergie dans le mode de fonctionnement d'économie d'énergie respectif ; et
le procédé comprend en outre la commande du processeur de signal et/ou du transmetteur de signal pour fonctionner dans le mode d'économie d'énergie avancé quand l'énergie électrique provenant du dispositif de collecte est au-dessous d'un autre niveau d'énergie prédéterminé.
